# DEMANDE DE BREVET EUROPEEN

(11) **EP 0 984 610 A1**
(43) Date de publication de la demande: **08.03.2000**
(21) Numéro de dépôt: 99402179.8
(22) Date de dépôt: 03.09.1999
(51) Int. Cl.: H04M 11/06, H04N 1/32, H04L 12/58

(54) **Modem à mémoire non volatile**

(30) Priorité: 04.09.1998 FR 9811084
(71) Demandeur: Olitec, 54220 Malzeville (FR)
(72) Inventeur: Pelletier, Didier, 54530 Saint Max (FR); De Somer, Thierry, 54000 Nancy (FR)
(74) Mandataire: Joly, Jean-Jacques

(57) **Abrégé**

Le modem (10) est capable de fonctionner selon un mode standard dans lequel le modem permet à un ordinateur associé (6a) de communiquer sur un réseau de télécommunication (1b), ou selon un mode autonome dans lequel une ou plusieurs fonctions telles que télécopieur, répondeur, répondeur-enregistreur, récepteur de messages électroniques et récepteur de fichiers de données sont mises en oeuvre par le modem (10) indépendamment de l'ordinateur (6a). Les données et/ou messages vocaux reçus par le modem en mode autonome sont stockés dans une mémoire non volatile amovible (54). Ces données et/ou messages vocaux peuvent alors être consultés en retirant la mémoire non volatile amovible (54) du modem (10) et en l'insérant dans un adaptateur approprié (6b) relié à l'ordinateur (6a). La présente invention permet d'éviter le transfert en série des données stockées dans le modem vers l'ordinateur.

## Description

La présente invention concerne de manière générale un module électronique pour connecter un ordinateur à un réseau de télécommunication. Un tel module électronique sera dénommé ci-après "modem". Plus particulièrement, la présente invention concerne un modem capable de stocker des télécopies, messages électroniques et/ou messages vocaux de manière autonome, c'est-à-dire même lorsque l'ordinateur est éteint.

Il existe sur le marché des modems capables de fonctionner selon un mode standard, dans lequel le modem permet à l'ordinateur auquel il est connecté de communiquer sur un réseau de télécommunication, et selon un mode autonome dans lequel une ou plusieurs fonctions de communication, telles que répondeur, répondeur-enrgistreur, télécopieur, récepteur de messages électroniques ou récepteur de fichiers de données, sont mises en oeuvre par le modem indépendamment de l'ordinateur. En mode autonome, les messages reçus du réseau de télécommunication sont mémorisés dans une mémoire non volatile, par exemple du type mémoire Flash, pour être ultérieurement récupérés par l'ordinateur une fois ce dernier allumé.

Ces modems sont d'un usage très pratique, puisqu'ils permettent de réceptionner, chez l'utilisateur, les télécopies et messages électroniques et vocaux destinés à celui-ci, même en cas d'absence de l'utilisateur. Toutefois, du fait que l'ordinateur est relié au modem par une liaison série, le téléchargement dans l'ordinateur des messages mémorisés dans le modem est un processus assez long, en particulier lorsqu'un nombre important de messages sont stockés dans le modem. En outre, il est généralement nécessaire d'attendre que tous les messages aient été téléchargés dans l'ordinateur avant de pouvoir consulter l'un d'entre eux.

Un autre inconvénient de ces modems réside dans la nécessité de configurer le modem à partir de l'ordinateur auquel il est connecté. Ainsi, par exemple, pour activer le mode autonome et sélectionner une ou plusieurs fonctions de communication à exécuter, l'utilisateur doit préalablement allumer l'ordinateur et lancer une application spécifique de commande du modem.

La présente invention vise à fournir un modem qui permette de stocker, de façon autonome, des messages reçus d'un réseau de télécommunication d'une telle manière que l'ordinateur associé puisse ensuite avoir un accès très rapide à chacun de ces messages.

A cette fin, il est prévu, selon un premier aspect de l'invention, un modem permettant de connecter un ordinateur à un réseau de télécommunication, caractérisé en ce qu'il comprend un moyen pour recevoir de façon amovible une mémoire non volatile, et un moyen pour écrire dans la mémoire non volatile amovible des données et/ou des messages vocaux reçus du réseau de télécommunication.

La mémoire non volatile amovible se présente typiquement sous la forme d'une carte à mémoire.

Lesdites données sont par exemple des données numériques représentatives de télécopies, de fichiers de données ou de messages électroniques (e-mails). Les messages vocaux sont de préférence numérisés par le modem dès leur réception et stockés sous forme de données numériques dans la mémoire non volatile amovible.

Pour transférer les données et/ou messages vocaux du modem vers l'ordinateur, il suffit de retirer la mémoire non volatile amovible du modem et de la connecter à un adaptateur approprié relié ou intégré à l'ordinateur. De cette manière, l'ordinateur peut lire ces données et/ou messages vocaux sans avoir à les télécharger à travers la liaison série reliant l'ordinateur au modem. L'utilisateur peut sélectionner, au moyen de l'ordinateur, l'un quelconque des fichiers mémorisés dans la mémoire amovible, par exemple une télécopie ou un message vocal, pour le consulter et éventuellement le charger en mémoire dans l'ordinateur. Chaque fichier ou message peut ainsi être consulté rapidement. En outre, il n'est pas nécessaire de connecter l'ordinateur au modem pour effectuer ce transfert, de sorte que les données et/ou messages vocaux mémorisés dans la mémoire non volatile amovible peuvent être consultés à partir d'un ordinateur autre que celui associé au modem.

La présente invention vise en outre à fournir un modem qui puisse être configuré directement, sans l'aide de l'ordinateur.

A cette fin, il est prévu, selon un second aspect de l'invention, un modem permettant de connecter un ordinateur à un réseau de télécommunication, caractérisé en ce qu'il comprend un moyen pour recevoir de façon amovible une mémoire non volatile, et un moyen pour configurer le modem à partir de données de configuration stockées dans la mémoire non volatile.

Un tel moyen de configuration pennet à l'utilisateur de configurer le modem, c'est-à-dire de sélectionner un mode de fonctionnement, directement, en insérant dans le modem une mémoire contenant des données de configuration appropriées. Ceci évite à l'utilisateur d'avoir à allumer l'ordinateur et à configurer le modem à partir de cet ordinateur.

Les données de configuration peuvent être préalablement écrites dans la mémoire non volatile amovible lorsque celle-ci est insérée dans le modem, par un moyen d'écriture prévu dans le modem et commandé par l'ordinateur.

Le moyen de configuration peut activer l'un ou l'autre d'un mode standard dans lequel le modem permet à l'ordinateur de communiquer sur le réseau de télécommunication et d'un mode autonome dans lequel une ou plusieurs fonctions de communication, telles que répondeur, répondeur-enregistreur, télécopieur, récepteur de messages électroniques et récepteur de fichiers de données, sont mises en oeuvre par le modem indépendamment de l'ordinateur.

Avantageusement, le moyen de configuration comprend un moyen pour sélectionner, ou valider, au moins une fonction de communication du mode autonome en fonction des données de configuration stockées dans la mémoire non volatile amovible. Lorsque le modem fonctionne en mode autonome, la ou les fonctions qui sont sélectionnées, et seulement celles-ci, sont mises en oeuvre par le modem.

Le moyen de configuration peut être adapté pour activer le mode standard lorsque le modem est dépourvu de la mémoire non volatile amovible.

En outre, de préférence, le moyen de configuration est adapté pour activer l'un ou l'autre des modes standard et autonome en fonction des données de configuration lorsque le modem est équipé de la mémoire non volatile amovible.

En variante, le moyen de configuration est adapté pour activer le mode autonome lorsque le modem est équipé de la mémoire non volatile amovible.

Le fonctionnement du modem est géré par un programme de gestion stocké dans une mémoire interne du modem. Conformément à l'invention, afin d'autoriser des mises à jour du programme de gestion indépendamment de l'ordinateur, le modem comprend un moyen pour remplacer dans la mémoire interne tout ou partie du programme de gestion par un programme contenu dans la mémoire non volatile amovible.

D'autres caractéristiques et avantages de la présente invention apparaîtront plus clairement à la lecture de la description détaillée suivante de plusieurs réalisations de l'invention, faite en référence aux dessins annexés dans lesquels :
- la figure 1 est un bloc-diagramme d'un modem conforme à la présente invention ; et
- la figure 2 est un schéma montrant comment une carte à mémoire amovible est insérée dans le modem de la figure 1.

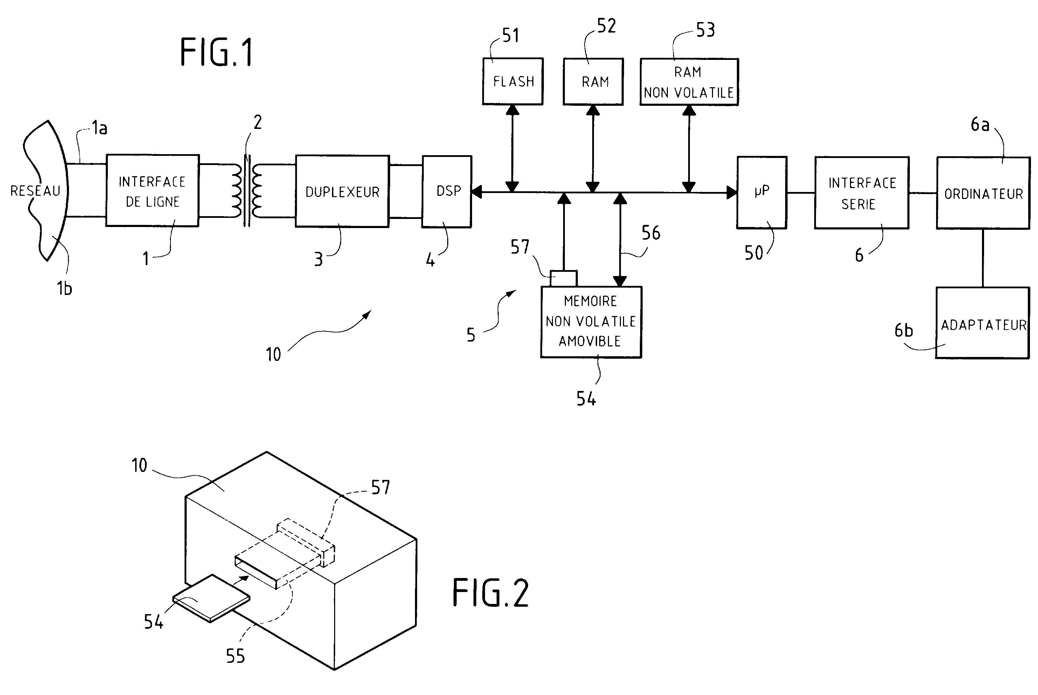

En référence à la figure 1, un modem 10 conforme à la présente invention comprend une interface de ligne 1 pour adapter le modem à une ligne téléphonique la reliée à un réseau de télécommunication 1b, un transformateur 2 assurant une fonction d'isolation électrique, un duplexeur 3 pour découpler les voies d'émission et de réception du modem, un processeur de traitement de signal 4, de type DSP (Digital Signal Processing), assurant les fonctions de modulation et démodulation du modem, une unité de gestion 5, et une interface série 6 pour connecter le modem à un ordinateur 6a. L'ordinateur 6a est typiquement un micro-ordinateur. Des amplificateurs et des filtres (non représentés) sont en outre prévus dans le modem entre le transformateur 2 et le processeur 4.

L'unité de gestion 5 gère les différentes fonctionnalités du modem. Plus particulièrement, l'unité de gestion gère deux modes de fonctionnement du modem, qui seront désignés dans la suite de la description respectivement par "mode standard" et "mode autonome".

Dans le mode standard, ou normal, le modem est configuré pour permettre à l'ordinateur 6a de communiquer sur le réseau de télécommunication 1b, c'est-à-dire notamment d'envoyer et/ou recevoir des données et/ou des messages vocaux à travers le réseau. Le mode standard est essentiellement utilisé lorsque l'ordinateur 6a est allumé et une application spécifique de commande du modem est exécutée par l'ordinateur.

Dans le mode autonome, le modem est configuré pour recevoir et stocker des télécopies, des messages électroniques (e-mails), des fichiers de données et/ou des messages vocaux indépendamment de l'ordinateur, c'est-à-dire quel que soit l'état marche/arrêt de celui-ci. A cet effet, le modem utilise des paramètres de configuration du mode autonome. Ces paramètres sont préalablement programmés par l'utilisateur du modem via l'ordinateur et l'application spécifique précitée. Ils indiquent notamment au modem une ou plusieurs fonctions du mode autonome à mettre en oeuvre parmi les fonctions suivantes : télécopieur, répondeur, répondeur-enregistreur, récepteur de messages électroniques et récepteur de fichiers de données. Les messages électroniques sont généralement reçus d'un serveur de fournisseur de services connecté au réseau Internet. Les fichiers de données sont eux principalement transmis par des ordinateurs distants équipés d'un modem.

L'unité de gestion 5 comporte notamment un microprocesseur 50, de type CPU (Central Processing Unit), une mémoire programmable non volatile 51, telle qu'une mémoire Flash, une mémoire vive RAM (Random Access Memory) 52 et une mémoire vive non volatile 53. La mémoire Flash 51 contient un programme de gestion du modem exécuté par le microprocesseur 50. Les mémoires vives 52 et 53 servent respectivement à mémoriser temporairement des données pendant l'exécution du programme de gestion et à stocker des paramètres propres au modem. Les données stockées temporairement par la mémoire vive 52 sont par exemple des télécopies, messages électroniques, fichiers de données ou messages vocaux reçus du réseau et à transmettre à l'ordinateur, ou des télécopies, messages électroniques, fichiers de données ou messages vocaux fournis par l'ordinateur en vue de leur transmission sur le réseau, lorsque le modem fonctionne en mode standard. Lesdits paramètres propres au modem stockés dans la mémoire 53 sont par exemple des paramètres indiquant le nombre de sonneries à attendre avant réponse automatique (fonction répondeur), le temps d'attente de tonalité avant numérotation, la vitesse de connexion souhaitée, etc.

Conformément à la présente invention, l'unité de gestion 5 inclut en outre des moyens de connexion à un support d'infonnation amovible 54. Le support d'information amovible 54 contient une mémoire non volatile, telle qu'une mémoire Flash, et se présente par exemple sous la forme d'une carte à mémoire. Selon une réalisation particulière de l'invention, une carte "SmartMedia" (marque déposée) de la société TOSHIBA est utilisée en tant que support d'information 54. D'autres cartes à mémoire appropriées sont toutefois disponibles dans le commerce. Le support d'information amovible 54 sera dénommé ci-après "mémoire non volatile amovible".

Les moyens de connexion à la mémoire non volatile amovible 54 comprennent un logement 55, représenté à la figure 2, adapté à la forme de la mémoire 54 et apte à recevoir cette dernière de manière amovible. Les moyens de connexion comprennent en outre des contacts et liaisons électriques 56, représentés schématiquement à la figure 1, permettant l'échange de données entre la mémoire non volatile amovible 54 et le microprocesseur de gestion 50. Des moyens 57 de détection de la présence ou non de la mémoire non volatile amovible 54 dans le logement 55 sont par ailleurs prévus. Les moyens de détection 57 sont reliés électriquement au microprocesseur 50.

La mémoire non volatile amovible 54 est essentiellement destinée à stocker des données relatives au mode autonome du modem. Plus particulièrement, la mémoire 54 sert à stocker, d'une part, les paramètres de configuration du mode autonome mentionnés précédemment et, d'autre part, les télécopies, messages électroniques, fichiers de données et messages vocaux qui sont reçus de la ligne téléphonique la, via les éléments 1 à 4, lorsque le mode autonome est actif.

Pour consulter les messages stockés dans la mémoire non volatile amovible 54, l'utilisateur allume l'ordinateur 6a, retire la mémoire 54 du modein pour l'insérer ensuite dans un adaptateur approprié 6b relié ou intégré à l'ordinateur 6a. L'adaptateur 6b est un adaptateur du commerce, utilisant par exemple le format PCMCIA (Personal Computer Memory Card International Association). Il peut également se présenter sous la forme d'une disquette, de format compatible avec un lecteur de disquette équipant l'ordinateur 6a, à l'intérieur de laquelle la carte mémoire 54 peut être introduite. L'ordinateur peut lire la mémoire 54 d'une manière comparable à une disquette classique, et a ainsi un accès très rapide aux télécopies, messages électroniques, messages vocaux et fichiers de données qui sont stockés dans cette mémoire. Contrairement à la technique antérieure, il n'est, selon l'invention, pas nécessaire d'attendre que tous les messages aient été transférés en série du modem vers l'ordinateur avant de pouvoir consulter l'un d'entre eux. En outre, l'utilisateur n'a pas besoin de relier l'ordinateur au modem pour effectuer le transfert des données et messages du modem vers l'ordinateur.

Comme indiqué précédemment, la mémoire non volatile amovible 54 contient des données de configuration du mode autonome. Ces données comprennent notamment :
- un premier paramètre P1 d'activation/désacrivation du mode autonome ;
- un second paramètre P2 de validation/invalidation de la fonction télécopieur ;
- un troisième paramètre P3 de validation/invalidation de la fonction répondeur ;
- un quatrième paramètre P4 de validation/invalidation de la fonction répondeur-enregistreur ;
- un cinquième paramètre P5 de validation/invalidation de la fonction récepteur de messages électroniques ; et
- un sixième paramètre P6 de validation/invalidation de la fonction récepteur de fichiers de données.

Les paramètres P1 à P6 ci-dessus peuvent être programmés par l'utilisateur. Pour ce faire, l'utilisateur insère la mémoire 54 dans le modem puis envoie au modem des instructions spécifiques en utilisant l'application de commande du modem exécutée par l'ordinateur. Ces instructions spécifiques contiennent les valeurs des paramètres P1 à P6, lesquelles valeurs sont écrites par le microprocesseur 50 dans la mémoire 54.

Lorsque le modem est sous tension et est dépourvu de la mémoire 54, celui-ci fonctionne en mode standard et ne peut donc fonctionner que sur commande de l'ordinateur. Dès que la mémoire 54 est insérée dans le modem, c'est-à-dire dès que les moyens de détection 57 détectent la présence de la mémoire 54 dans le logement 55, le microprocesseur 50 lit les paramètres de configuration P1 à P6 et configure le modem en fonction de ces paramètres.

Si le paramètre P1 est à une valeur qui indique que le mode autonome doit être actif, le microprocesseur 50 désactive le mode standard et active le mode autonome et plus particulièrement les fonctions du mode autonome qui sont validées par leur paramètre de validation/invalidation. Ainsi, par exemple, si les paramètres P2 et P4 indiquent que les fonctions télécopieur et répondeur-enregistreur sont validées, le microprocesseur 50 active ces fonctions de sorte qu'elles soient mises en oeuvre simultanément. Le modem pourra alors recevoir et stocker des télécopies et des messages vocaux indépendamment de l'ordinateur. Il pourra également émettre un message d'accueil vers tout terminal appelant en réponse à la réception d'un appel téléphonique.

Si le paramètre P1 est à une valeur qui indique que le mode autonome doit être inactif, le modem continue à fonctionner en mode standard.

Ensuite, dès que la mémoire non volatile amovible 54 est retirée du modem, c'est-à-dire dès que les moyens de détection 57 ne détectent plus la présence de la mémoire 54 dans le logement 55, et si le modem fonctionnait en mode autonome, le microprocesseur 50 désactive le mode autonome et active le mode standard.

Au moment de la mise sous tension du modem, le microprocesseur 50 détermine, par l'intermédiaire des moyens de détection 57, si la mémoire 54 est présente ou non dans le logement 55. Si le modem est dépourvu de la mémoire 54, le microprocesseur 50 active le mode standard. Si, au contraire, le modem est équipé de la mémoire 54 lors de la mise sous tension, le microprocesseur 50 lit les paramètres de configuration P1 à P6, configure le modem en fonction de ces paramètres de la manière indiquée ci-dessus et, notamment, active le mode standard ou le mode autonome selon la valeur du paramètre P1.

Selon la présente invention, il est ainsi possible d'activer l'un ou l'autre des modes standard et autonome directement à partir du modem, sans avoir besoin d'utiliser l'ordinateur. En effet, en initialisant la mémoire 54 de façon que le paramètre P1 indique que le mode autonome doit être actif, l'utilisateur pourra ensuite activer le mode autonome et désactiver le mode standard simplement en insérant la mémoire 54 dans le modem, et activer le mode standard et désactiver le mode autonome simplement en retirant la mémoire 54 du modem.

En outre, selon l'invention, il est également possible de configurer le mode autonome directement à partir du modem, à l'aide de plusieurs mémoires non volatiles amovibles du même type mais configurées différemment. A titre d'exemple, les opérations successives suivantes peuvent être réalisées :
1) L'utilisateur configure, via l'ordinateur, le modem en mode autonome avec une première carte à mémoire insérée dans le modem, en validant la fonction télécopieur seulement. Le modem modifie alors en conséquence la valeur des paramètres P1 à P6 dans cette première carte à mémoire.
2) L'utilisateur configure le modem en mode autonome avec une seconde carte à mémoire insérée dans le modem en validant la fonction répondeur seulement.
3) L'utilisateur configure le modem en mode autonome avec une troisième carte à mémoire insérée dans le modem en validant la fonction répondeur-enregistreur seulement.

Ensuite, si l'utilisatcur insère la première carte à mémoire dans le modem, ce dernier mettra en oeuvre la fonction télécopieur uniquement. Le modem pourra alors recevoir des télécopies, mais refusera les messages vocaux, les messages électroniques et les fichiers de données. Dès que la première carte à mémoire aura été retirée du modem, le modem passera automatiquement en mode standard. Si l'utilisateur souhaite ensuite activer la fonction autonome de répondeur ou répondeur-enregistreur, il insérera respectivement la seconde ou troisième carte à mémoire dans le modem. Cette application de l'invention évite à l'utilisateur d'allumer l'ordinateur et de configurer le modem à partir de celui-ci à chaque fois qu'il souhaite modifier la configuration du modem.

Selon une variante de la présente invention, le paramètre P1 est supprimé, l'utilisateur ne programmant plus que les paramètres P2 à P6. Le modem passe alors systématiquement en mode autonome dès que la mémoire non volatile amovible est insérée dans le logement 55.

Dans la description ci-dessus, seulement six paramètres de configuration P1 à P6 ont été mentionnés. Les données de configuration du mode autonome peuvent cependant comprendre davantage de paramètres. En particulier, des paramètres peuvent être prévus pour valider/invalider des options associées à une fonction donnée. Par exemple, la fonction répondeur-enregistreur peut comporter une option selon laquelle les messages vocaux stockés dans la mémoire 54 peuvent être consultés à distance à partir d'un terminal téléphonique (fonction répondeur-enregistreur interrogeable à distance).

Selon une autre variante de l'invention, la mémoire non volatile amovible 54 est apte à stocker une version mise à jour du programme de gestion du modem ou d'une partie de ce programme. Lorsque la mémoire 54 est insérée dans le modem, le microprocesseur 50 détecte la présence d'un programme (code) dans celle-ci et remplace dans la mémoire Flash 51 le programme de gestion du modem, ou une partie de ce programme, par la version mise à jour contenue dans la mémoire 54.

## Revendications

1. Modem (10) permettant de connecter un ordinateur (6a) à un réseau de télécommunication (1b), caractérisé en ce qu'il comprend un moyen (55, 56) pour recevoir de façon amovible une mémoire non volatile (54), et un moyen (50) pour écrire dans la mémoire non volatile amovible des données et/ou des messages vocaux reçus du réseau de télécommunication.

2. Modem (10) permettant de connecter un ordinateur (6a) à un réseau de télécommunication (1b), caractérisé en ce qu'il comprend une mémoire non volatile amovible (54) pour stocker des données et/ou des messages vocaux reçus du réseau de télécommunication.

3. Modem selon la revendication 1 ou 2, caractérisé en ce que la mémoire non volatile amovible (54) est apte à être connectée à un adaptateur (6b) relié ou intégré à l'ordinateur (6a), de sorte que les données et/ou messages vocaux stockés dans la mémoire non volatile amovible puissent être consultés par l'ordinateur.

4. Modem selon l'une quelconque des revendications 1 à 3, caractérisé en ce que la mémoire non volatile amovible (54) se présente sous la forme d'une carte à mémoire.

5. Modem selon l'une quelconque des revendications 1 à 4, caractérisé en ce que lesdites données sont représentatives de télécopies, de fichiers de données ou de messages électroniques.

6. Modem selon l'une quelconque des revendications 1 à 5, comprenant une mémoire interne (51) pour stocker un programme dc gestion du modem, caractérisé en ce qu'il comprend en outre un moyen (50, 56) pour remplacer dans la mémoire interne (51) tout ou partie du programme de gestion par un programme contenu dans la mémoire non volatile amovible (54).

7. Modem selon l'une quelconque des revendications 1 à 6, caractérisé en ce qu'il comprend en outre un moyen de configuration (50, 56) pour configurer le modem à partir de données de configuration stockées dans la mémoire non volatile amovible (54).

8. Modem selon la revendication 7, caractérisé en ce qu'il comprend en outre un moyen (6, 50, 56) pour écrire lesdites données de configuration du modem dans la mémoire non volatile amovible (54) sur commande de l'ordinateur.

9. Modem selon l'une quelconque des revendications 1 à 6, caractérisé en ce qu'il comprend un moyen de configuration (50, 56, 57) pour activer l'un ou l'autre d'un mode standard dans lequel le modem permet à l'ordinateur (6a) de communiquer sur le réseau de télécommunication (1b) et d'un mode autonome dans lequel une ou plusieurs fonctions de communication, telles que répondeur, répondeur-enregistreur, télécopieur, récepteur de messages électroniques, récepteur de fichiers de données, sont mises en oeuvre par le modem indépendamment de l'ordinateur.

10. Modem selon la revendication 9, caractérisé en ce que ledit moyen de configuration comprend un moyen (50, 56) pour sélectionner au moins une fonction de communication du mode autonome en fonction de données de configuration stockées dans la mémoire non volatile amovible (54).

11. Modem selon la revendication 9 ou 10, caractérisé en ce que le moyen de configuration (50, 57) est adapté pour activer le mode standard lorsque le modem est dépourvu de la mémoire non volatile amovible (54).

12. Modem selon l'une quelconque des revendications 9 à 11, caractérisé en ce que le moyen de configuration (50, 56, 57) est adapté pour activer l'un ou l'autre des modes standard et autonome en fonction de données de configuration stockées dans la mémoire non volatile amovible (54) lorsque le modem est équipé de ladite mémoire non volatile amovible.

13. Modem selon l'une quelconque des revendications 9 à 11, caractérisé en ce que le moyen de configuration (50, 57) est adapté pour activer le mode autonome lorsque le modem est équipé de la mémoire non volatile amovible (54).

14. Modem permettant de connecter un ordinateur (6a) à un réseau de télécommunication (1b), caractérisé en ce qu'il comprend un moyen (55,56) pour recevoir de façon amovible une mémoire non volatile (54), et un moyen (50,56) pour configurer le modem en fonction de données de configuration stockées dans la mémoire non volatile.

15. Modem permettant de connecter un ordinateur (6a) à un réseau de télécommunication (1b), caractérisé en ce qu'il comprend :
un moyen (55,56) pour recevoir de façon amovible une mémoire non volatile (54), et
un moyen de commande (50, 56) pour activer l'un ou l'autre d'un mode standard dans lequel le modem permet à l'ordinateur de communiquer sur le réseau de télécommunication et d'un mode autonome dans lequel une ou plusieurs fonctions de communication, telles que répondeur, répondeur-enregistreur, télécopieur, récepteur de messages électroniques ou récepteurs de fichiers de données sont mises en oeuvre par le modem indépendamment de l'ordinateur,
ledit moyen de commande étant adapté pour activer le mode standard ou le mode autonome en fonction de données de configuration stockées dans la mémoire non volatile.

16. Modem permettant de connecter un ordinateur (6a) à un réseau de télécommunication (1b), caractérisé en ce qu'il comprend :
un moyen (55,56) pour recevoir de façon amovible une mémoire non volatile (54), et
un moyen de commande (50, 56) pour activer l'un ou l'autre d'un mode standard dans lequel le modem permet à l'ordinateur de communiquer sur le réseau de télécommunication et d'un mode autonome dans lequel une ou plusieurs fonctions de communication, telles que répondeur, répondeur-enregistreur, télécopieur, récepteur de messages électroniques ou récepteurs de fichiers de données sont mises en oeuvre par le modem indépendamment de l'ordinateur, et
un moyen (50, 56) pour sélectionner au moins une fonction de communication dudit mode autonome sur la base de données de configuration stockées dans la mémoire non volatile.

17. Modem selon la revendication 16, caractérisé en en ce que le moyen de commande est adapté pour activer le mode standard ou le mode autonome en fonction des données de configuration stockées dans la mémoire non volatile.

18. Modem selon l'une quelconque des revendications 14 à 17, équipé de ladite mémoire non volatile amovible (54).
